# EUROPEAN PATENT APPLICATION

(11) **EP 2 072 119 A1**
(43) Date of publication of application: **24.06.2009**
(21) Application number: 08253288.8
(22) Date of filing: 09.10.2008
(51) Int. Cl.: B01J 21/06, B01J 23/30, B01J 23/652, B01J 23/888, B01J 35/00, B01J 35/02, B01J 37/00, B01J 37/02, B01J 37/06, B01J 35/10, B01D 53/00

(54) **Photocatalyst dispersion liquid and process for producing the same**

(30) Priority: 09.10.2007 JP 2007263007; 17.12.2007 JP 2007324474; 03.03.2008 JP 2008051812; 20.06.2008 JP 2008161429
(71) Applicant: Sumitomo Chemical Company, Limited, Tokyo 104-8260 (JP)
(72) Inventor: Sakatani, Yoshiaki, Niihama-shi Ehime 792-0025 (JP); Okusako, Kensen, Niihama-shi Ehime 792-0831 (JP); Murata, Makoto, Niihama-shi Ehime 792-0003 (JP)
(74) Representative: Cresswell, Thomas Anthony

(57) **Abstract**

A photocatalyst dispersion liquid comprises a dispersion of titanium oxide photocatalyst particles and tungsten oxide photocatalyst particles in a dispersion medium; the surfaces of the titanium oxide photocatalyst particles and the tungsten oxide photocatalyst particles have the same charge polarity, thus the titanium oxide photocatalyst particles and the tungsten oxide photocatalyst particles do not aggregate easily and there is no solid-liquid separation.

## Description

### BACKGROUND OF THE INVENTION

### 1. Field of the Invention

The present invention relates to a photocatalyst dispersion liquid and, more particularly, a photocatalyst dispersion liquid containing titanium oxide photocatalyst particles and tungsten oxide photocatalyst particles as a photocatalyst.

### 2. Description of Related art

When light having energy higher than the band gap is irradiated to a semiconductor, electrons in a valence band are excited to a conduction band so that positive holes are generated in the valence band and electrons are generated at the conduction band respectively. The positive holes and the electrons respectively have strong oxidizing energy and reducing energy, and thus exert an oxidation and reduction reaction on molecular species in contact with the semiconductor. This oxidation and reduction reaction is called a photocatalytic reaction, and a semiconductor which enables to have such the photocatalytic activity is called a photocatalyst. As for such the photocatalyst, a particle-like photocatalyst such as titanium oxide photocatalyst particles and tungsten oxide photocatalyst particles is known.

A photocatalyst dispersion liquid obtained by dispersing such the titanium oxide photocatalyst particles and tungsten oxide photocatalyst particles in a dispersion medium is known (Japanese Patent Application Laid-Open No. 2005-231935). By coating this photocatalyst dispersion liquid on a surface of a base material, a photocatalyst layer containing titanium oxide photocatalyst particles and tungsten oxide photocatalyst particles and having a photocatalytic activity can be easily formed on the surface of the base material.

### BRIEF SUMMARY OF THE INVENTION

However, the conventional photocatalyst dispersion liquid obtained by dispersing titanium oxide photocatalyst particles and tungsten oxide photocatalyst particles in a dispersion medium has a problem that the particles are aggregated each other so as to easily generate solid-liquid separation.

Present inventors carried out earnest works so as to develop a photocatalyst dispersion liquid in which titanium oxide photocatalyst particles and tungsten oxide photocatalyst particles, which are dispersed in a dispersion medium, are not aggregated easily so as not to generate solid-liquid separation. As a result, they found out the followings to complete the present invention. That is, the surfaces of conventional titanium oxide photocatalyst particles are charged positively, and the surfaces of conventional tungsten oxide photocatalyst particles are charged negatively. Thus, these particles are easily aggregated in a dispersion medium. Therefore, when both the surfaces of the titanium oxide photocatalyst particles and the tungsten oxide photocatalyst particles are made to have same polarity, that is, to have positive charge or negative charge respectively, the aggregation of the particles are suppressed so as not to generate solid-liquid separation.

That is, the present invention is to provide a photocatalyst dispersion liquid obtained by dispersing titanium oxide photocatalyst particles and tungsten oxide photocatalyst particles in a dispersion medium, where the surfaces of the titanium oxide photocatalyst particles and the tungsten oxide photocatalyst particles in a dispersion medium are charged in the same polarity.

According to the photocatalyst dispersion liquid of the present invention, since the surfaces of the titanium oxide photocatalyst particles and the tungsten oxide photocatalyst particles in a dispersion medium are charged in the same polarity, these particles are not aggregated each other, and thus solid-liquid separation is not generated. Further, since the photocatalyst dispersion liquid of the present invention can be coated on a base material without aggregating the titanium oxide photocatalyst particles and the tungsten oxide photocatalyst particles, a photocatalyst coated-film formed by coating this liquid has high photocatalytic activity.

The above and further objects and features of the invention will more fully be apparent from the following detailed description.

### DETAILED DESCRIPTION OF THE INVENTION

### [Titanium oxide photocatalyst particles]

The titanium oxide photocatalyst particles composing a photocatalyst dispersion liquid of the present invention are particle-like titanium oxide having a photocatalytic activity and, for example, meta-titanic acid particles or titanium dioxide (TiO₂) particles in which a crystal structure is an anatase type, brookite type or rutile type.

For example, the meta-titanic acid particles can be obtained by the following process 1.
Process 1: Process for hydrolyzing a titanyl sulfate aqueous solution with heating.

For example, the titanium dioxide particles can be obtained by any one process of the following processes 2-1 to 2-3.
Process 2-1: Process for adding a base to a titanyl sulfate or titanium chloride aqueous solution without heating so as to obtain a precipitate, and burning the precipitate.
Process 2-2: Process for adding water, an acid aqueous solution, or a basic aqueous solution to a titanium alkoxide so as to obtain a precipitate, and burning the precipitate.
Process 2-3: Process for burning meta-titanic acid.

The titanium dioxide particles obtained by these processes 2-1 to 2-3 can be obtained as anatase-type, brookite-type or rutile-type particles depending on a burning temperature and a burning time at a time of burning.

As for the particle diameters of the titanium oxide photocatalyst particles, the average dispersed particle diameter is generally from 20nm to 150nm, preferably from 40nm to 100nm, from a view point of a photocatalytic activity.

The BET specific surface of the titanium oxide photocatalyst particles is generally from 100 m²/g to 500 m²/g, preferably from 300 m²/g to 400 m²/g, from the view point of a photocatalytic activity.

### [Tungsten oxide photocatalyst particles]

The tungsten oxide photocatalyst particles are particle-like tungsten oxide having a photocatalytic activity, and tungsten trioxide (WO₃) particles are used in general. For example, the tungsten trioxide particles can be obtained by a process for adding an acid to a tungstate aqueous solution so as to obtain tungstic acid as a precipitate, and burning the tungstic acid. Further, the tungsten trioxide particles can be also obtained by a process for thermally decomposing ammonium metatungstate or ammonium paratungstate with heating.

As for the particle diameters of the tungsten oxide photocatalyst particles, an average dispersed particle diameter is generally from 50nm to 200nm, preferably from 80nm to 130nm, from the view point of a photocatalytic activity.

The BET specific surface of the tungsten oxide photocatalyst particles is generally from 5 m²/g to 100 m²/g, preferably from 20 m²/g to 50 m²/g, from the view point of a photocatalytic activity.

The mass ratio of use amounts of titanium oxide photocatalyst particles and tungsten oxide photocatalyst particles is generally from 4:1 to 1:8, and preferably from 2:3 to 3:2.

### [Dispersion medium]

As for the dispersion medium, a water medium mainly containing water is used. More particularly, a medium containing a use amount of water equal to or greater than 50% by mass is used. Water can be used independently, or a mixed solvent of water and a water-soluble organic solvent can be used. As for the water-soluble organic solvent, for example, a water-soluble alcoholic solvent such as methanol, ethanol, propanol or butanol, acetone, methylethyl ketone, and the like can be used.

An use amount of the dispersion medium is generally from 5 mass times to 200 mass times, preferably from 10 mass times to 100 mass times, with respect to a total amount of the titanium oxide photocatalyst particles and the tungsten oxide photocatalyst particles. When the use amount of the dispersion medium is less than 5 mass times, the titanium oxide photocatalyst particles and the tungsten oxide photocatalyst particles are precipitated easily. When the use amount is more than 200 mass times, there is disadvantageous in the view point of volume efficiency.

### [Photocatalyst dispersion liquid]

The hydrogen ion concentration of the photocatalyst dispersion liquid of the present invention is generally from pH 0.5 to pH 8.0, and preferably from pH 1.0 to pH 7.0. When the hydrogen ion concentration has pH of smaller than 0.5, acidity is too strong, and thus the liquid is hardly handled. When the hydrogen ion concentration has pH of greater than 8.0, the tungsten oxide photocatalyst particles may be dissolved. The hydrogen ion concentration of the photocatalyst dispersion liquid can be generally adjusted by adding an acid. As for the acid, for example, nitric acid, hydrochloric acid, sulfuric acid, phosphoric acid, formic acid, acetic acid, oxalic acid, or the like can be used.

### [Electrification of a surface]

In the photocatalyst dispersion liquid of the present invention, the surfaces of the titanium oxide photocatalyst particles and the tungsten oxide photocatalyst particles are charged in the same polarity More particularly, both the surfaces are charged positively or negatively.

The surfaces of the meta-titanic acid particles obtained by the above-described process 1 and the titanium dioxide particles obtained by the above-described processes 2-1 to 2-3 are charged positively in general.

On the other hand, as for the tungsten oxide particles obtained by the process for adding an acid to a tungstate aqueous solution so as to obtain tungstic acid as a precipitate and burning the tungstic acid, and the tungsten oxide particles obtained by thermally decomposing ammonium metatungstate and ammonium paratungstate with heating, the surfaces of these particles are charged negatively.

Therefore, when the titanium oxide photocatalyst particles having the positively charged surfaces and tungsten oxide photocatalyst particles having the negatively charged surfaces are used, for example, the surfaces of the titanium oxide photocatalyst particles are made to be charged negatively so as to be used in the photocatalyst dispersion liquid of the present invention.

In order to make the positively charged surfaces of the titanium oxide photocatalyst particles to the negatively charged surfaces, the titanium oxide photocatalyst particles can be dispersed in a solution in which a surface treatment agent for making the surfaces of the titanium oxide photocatalyst particles to charge negatively is dissolved in the dispersion medium. As for such the surface treatment agent, for example, polycarboxylic acid such as dicarboxylic acid or tricarboxylic acid, or phosphoric acid can be used. For example, oxalic acid or the like can be used as the dicarboxylic acid, and citric acid or the like can be used as the tricarboxylic acid. A free acid or a salt can be used as polycarboxylic acid and phosphoric acid. As for a salt, for example, an ammonium salt or the like can be used. As for the surface treatment agent, oxalic acid, ammonium oxalate or the like can be used preferably.

The use amount of the surface treatment agent is generally 0.001 mol times or more, preferably 0.02 mol times or more, in order to sufficiently charge the surfaces of the titanium oxide photocatalyst particles in terms of TiO₂. The use amount of the surface treatment agent is generally 0.5 mol times or less, preferably 0.3 mol times or less, from the view point of economical efficiency.

By dispersing the titanium oxide photocatalyst particles having the positively charged surfaces in the solution in which the surface treatment agent is dissolved with the dispersion medium, the surface treatment agent dissolved in the surface treatment solution is adsorbed on the surfaces of the titanium oxide photocatalyst particles, and thereby the surfaces can be charged negatively.

The electrifications of surfaces of the titanium oxide photocatalyst particles and the tungsten oxide photocatalyst particles can be measured by a zeta potential at the time of respectively dispersing the particles in a solvent. As for the solvent used for measuring the zeta potential, a sodium chloride aqueous solution (having a sodium chloride concentration of 0.01 mol/L), which is added with hydrochloric acid to have a hydrogen ion concentration having pH 3.0, is used. The use amount of the solvent is generally 10000 mass times to 1000000 mass times with respect to the titanium oxide photocatalyst particles or tungsten oxide photocatalyst particles.

### [Producing of a photocatalyst dispersion liquid]

The photocatalyst dispersion liquid of the present invention can be obtained by dispersing the titanium oxide photocatalyst particles having the positively charged surfaces in the solution in which the surface treatment agent is dissolved with the dispersion medium, and mixing the particles with the tungsten oxide photocatalyst particles having the negatively charged surfaces.

The photocatalyst dispersion liquid can be also obtained by dispersing the titanium oxide photocatalyst particles having the positively charged surfaces in the above-described solution, subjecting the particles to a dispersion treatment, and mixing those with the tungsten oxide photocatalyst particles having the negatively charged surfaces. For example, the dispersion treatment can be carried out by a general method using a medium stirring dispersion machine.

Although the tungsten oxide photocatalyst particles can be mixed as they are, these particles are generally mixed in a state of being dispersed in the dispersion medium, and preferably mixed after subjecting to a dispersion treatment. For example, the dispersion treatment can be carried out by a general method using a medium stirring dispersion machine.

### [Electron-withdrawing substance or its precursor]

The photocatalyst dispersion liquid of the present invention can contain an electron-withdrawing substance or its precursor. The electron-withdrawing substance is supported on the surface of the photocatalyst so as to exert electron-withdrawing property. The photocatalytic activity can be more increased by supporting the electron-withdrawing substance on the surface of the photocatalyst and thereby suppressing the recombination of electrons and positive holes, where the electrons are excited at the conduction band and the positive holes are generated at the valence band by irradiation of light.

As for such the electron-withdrawing substance, for example, metals such as Cu, Pt, Au, Pd, Ag, Fe, Nb, Ru, Ir, Rh, Co and the like, preferably Cu, Pt, Au, Pd can be sued. Further, oxides and hydroxides of these metals can be also used.

The precursor of the electron-withdrawing substance is a compound that can convert to an electron-withdrawing substance on the surface of a photocatalyst. For example, such the precursor is nitrate, sulfate, halide, an organic acid salt, carbonate, phosphate or the like of the above-described metal. More particularly, for example, as for a precursor of copper, copper nitrate (Cu(NO₃)₂), copper sulfate (Cu(SO₄)₂), copper chloride (CuCl₂, CuCl), copper bromide (CuBr₂, CuBr), copper iodide (CuI), copper iodate (CuI₂, O₆), copper ammonium chloride (Cu(NH₄)₂Cl₄), copper oxychloride (Cu₂Cl(OH)₃), copper acetate (CH₃COOCu, (CH₃COO)₂Cu), copper formate ((HCOO) ₂Cu), copper carbonate (CuCO₃), copper oxalate (CuC₂O₄), copper citrate (Cu₂C₆H₄O₇), copper phosphate (CuPO₄), or the like, can be used. As for a precursor of platinum, platinum chloride (PtCl₂, PtCl₄), platinum bromide (PtBr₂, PtBr₄), platinum iodide (PtI₂, PtI₄), potassium platinum chloride (K₂(PtCl₄)), hexachloroplatinic acid (H₂PtCl₆, platinum sulfite (H₃(Pt(SO₃)₂OH), platinum oxide (PtO₂), tetrammine platinum chloride (Pt(NH₃)₄Cl₂), tetrammine platinum hydrogencarbonate (C₂H₁₄N₄O₆Pt), tetrammine platinum hydrogenphosphate (Pt(NH₃)₄HPO₄), tetrammine platinum hydroxide (Pt(NH₃)₄(OH)₂), tetrmmine platinum nitrate (Pt(NO₃)₂(NH₃)₄), tetrmmine platinum tetrachloroplatinum ((Pt(NH₃)₄)(PtCl₄)), or the like, can be used. As for a precursor of Au, gold chloride (AuCl), gold bromide (AuBr), gold iodide (AuI), gold hydroxide, (Au (OH)₂), tetrachlorochloroauric acid (HAuCl₄), potassium tetrachlorochloroaurate (KAuCl₄), potassium tetrabromochloroaurate (KAuBr₄), gold oxide (Au₂O₃), or the like, can be used. As for a precursor of palladium, palladium acetate ((CH₃COO)₂Pd), palladium chloride (PdCl₂), palladium bromide (PdBr₂), palladium iodide (PdI₂), palladium hydroxide (Pd(OH)₂), palladium nitrate (Pd(NO₃)₂), palladium oxide (PdO), palladium sulfate (PdSO₄), potassium tetrachloropalladium acid (K₂(PdCl₄)), potassium tetrabromopalladium acid (K₂(PdBr₄)), or the like, can be used.

These electron-withdrawing substances or these precursors can be used independently or by mixing two or more kinds.

When the electron-withdrawing substance or its precursor is used, the use amount is generally from 0.005 parts by mass to 0.6 parts by mass, preferably from 0.01 parts by mass to 0.4 parts by mass, in terms of the metal atom with respect to the total amount of 100 parts by mass of the titanium oxide photocatalyst particles and the tungsten oxide photocatalyst particles. When the use amount is less than 0.005 parts by mass, the photocatalytic activity by the use of the electron-withdrawing substance is not sufficiently improved. When the use amount is more than 0.6 parts by mass, the photocatalytic activity is to be insufficient easily.

For example, the photocatalytst dispersion liquid containing the electron-withdrawing substance or its precursor can be obtained by the similar process to that described above, that is, mixing the titanium oxide photocatalyst dispersion liquid and the tungsten oxide photocatalyst dispersion liquid, and adding the electron-withdrawing substance or its precursor to the mixture. When the precursor is added, light-irradiation can be carried out after the addition. A light to be irradiated is a visible radiation or an ultraviolet radiation. By carrying out the light-irradiation, the precursor can be converted to the electron-withdrawing substance. When light having the light-excitable wavelength of the photocatalyst is irradiated, electrons are generated by the light excitation so as to reduce the precursor, and then the precursor is supported by the surfaces of the photocatalyst particles as the electron-withdrawing substance.

### [Additive]

The photocatalyst dispersion liquid of the present invention can be added with an additive within the range not change the electrifications of the titanium oxide photocatalyst particles and the tungsten oxide photocatalyst particles.

As for the additive, for example, a material added for improving the photocatalytic activity can be used. More particularly, the additive is a silicon compound such as amorphous silica, silica sol, water glass, organopolysiloxane or the like, an aluminum compound such as amorphous alumina, alumina sol, an aluminum hydroxide or the like, an aluminosilicate such as zeolite, kaolinite or the like, an alkali earth metal oxide or an alkali earth metal hydroxide such as magnesium oxide, calcium oxide, strontium oxide, barium oxide, magnesium hydroxide, calcium hydroxide, strontium hydroxide, barium hydroxide or the like, calcium phosphate, molecular sieve, active carbon, a polycondensation product of an organopolysiloxane compound, phosphate, a fluorine-based polymer, a silicon-based polymer, an acrylic resin, a polyester resin, a melamine resin, an urethane resin, an alkyd resin, or the like. The additive can be used independently or by mixing two or more kinds.

Further, a binder can be used, and this binder is for more strongly holding the titanium oxide photocatalyst particles and the tungsten oxide photocatalyst particles on the surface of a base material when coating the photocatalyst dispersion liquid on the surface of the base material (Japanese Patent Application Laid-Open No. 8-67835, Japanese Patent Application Laid-Open No. 9-25437, Japanese Patent Application Laid-Open No.10-183061, Japanese Patent Application Laid-Open No.10-183062, Japanese Patent Application Laid-Open No.10-168349, Japanese Patent Application Laid-Open No. 10-225658, Japanese Patent Application Laid-Open No. 11-1620, Japanese Patent Application Laid-Open No.11-1661, Japanese Patent Application Laid-Open No.2004-59686, Japanese Patent Application Laid-Open No.2004-107381, Japanese Patent Application Laid-Open No.2004-256590, Japanese Patent Application Laid-Open No.2004-359902, Japanese Patent Application Laid-Open No.2005-113028, Japanese Patent Application Laid-Open No.2005-230661, Japanese Patent Application Laid-Open No. 2007-161824).

For example, the photocatalyst dispersion liquid containing the additive can be obtained by a process adding the additive to the photocatalyst dispersion liquid which is obtained by mixing the titanium oxide photocatalyst dispersion liquid and the tungsten oxide photocatalyst dispersion liquid.

### [Forming of a photocatalyst layer]

A photocatalyst functional product can be produced by coating the photocatalyst dispersion liquid of the present invention on the surface of a base material, and volatilizing the dispersion medium, where the product has a photocatalyst layer, on the surface of the base material, containing the titanium oxide photocatalyst particles and the tungsten oxide photocatalyst particles so as to indicate a photocatalytic activity.

When the photocatalyst dispersion liquid contains the electron-withdrawing substance or its precursor, the electron-withdrawing substance or its precursor is supported by the surfaces of the titanium oxide photocatalyst particles and the tungsten oxide photocatalyst particles. When the precursor is used, the supported precursor is converted to the electron-withdrawing substance after supporting.

The photocatalyst functional product generally holds the photocatalyst on the surface with the strength that can be equal to practical use. As for the shape and size the photocatalyst used in this case, various kinds of shapes such as a particle, fiber, a thin piece and the like can be applied and a size can be properly selected corresponding to an application and surface property. Further, when the photocatalyst is formed as a film on the surface of the photocatalyst functional product, the film thickness can be properly selected and formed to be several hundred nm to several mm. The photocatalyst is preferably held on the surface to which a visible radiation is irradiated and which is continuously or intermittently, and spatially connected with a part generating a malodorous substance, among the inner surface and outer surface of the photocatalyst functional product made of a material such as plastics, a metal, ceramics, wood, concrete or paper.

### [Photocatalyst functional products]

As for examples of the photocatalyst functional products, the followings are described.
That is, clothes (underwear, nightclothes, western clothes, Japanese clothes, an apron), furnishings (socks, a hat, a tie, a handkerchief, a belt), personal effects (an umbrella, a stick, a folding fan, a round fan, an accessory, eyeglasses, a wig), a bag, a portable bag, shoes, smoker's requisites (a smoking pipe, a smoking pipe rest, a smoking pipe cleaning tool, a tobacco pipe, a cigarette pouch, an ashtray, a lighter, a table lighter, a lighter with a watch, a matchbox, a gas igniter), a cosmetic and hairdressing tools (a compact, a perfume bottle, an atomizer, a pocket mirror, a hand mirror, a shaving brush, a brush for makeup, a comb, a hair brush, a nail clipper, a hair roller, a hair iron, a hair drier, a knife for manicure, a cuticle pusher for manicure, a nail file, a hair clipper, an electric hair clipper, a western razor, a Japanese razor, a safety razor, a spare razor blade, a handy razor, an electric razor, a chair for hairdressing, a button, a zipper), rugs (a carpet, a tatami facing, an edge materials of a tatami, a flower straw mat, a cushion, a cushion cover, a floor cushion, a floor cushion cover, a bath mat, a doormat, an electric carpet), bedclothes (a futon, a futon cover, a blanket, a bed sheet, a pillow, a pillow cover, a sleeping-bag, a mattress), a curtain, a Venetian blind, a slat for Venetian blinds, the bottom rail for Venetian blinds, a ladder tape for Venetian blinds, a blind, a shop curtain, a beads shop curtain, a tablecloth, a napkin, a centerpiece, a place mat, room decorations (a vase, an ornament, a frame, a pole hanging, a wall hanging, a tablet tray, an artificial flower), a wallpaper, a deodorant, washing and a cleaning equipments (a tub, a washboard, an electrical washing machine, an electric washing machine with a clothes dryer, a drain hose for electrical washing machines, a clothespole, a clothespole supporter, a clothespole prop, a laundry hanger, a washing string, a clothespin, a clothes dryer, a futon dryer, an iron, an iron placing stand, an ironing board, a trouser press, a washing finishing machine, a broom, a brush for cleaning, a dress brush, a dustpan, a duster, a dustcloth, a mop, a handy cleaner, a garbage can, a vacuum cleaner, an electric floor polishing machine, a brush for electric floor polishing machine, an electric shoeshine machine), a home sanitation supplies (a toothbrush, a toothbrush case, a toothbrush stand, an electric toothbrush, the brush for electric toothbrush, tweezers, an earpick, a dirt remover, a brush for bathing, a soap box, a washbasin, a washcloth, a towel, an eyedropper, an eye washing apparatus, an electric mosquito-repelling device, an insecticide container, a deodorizer container), containers for cooking, eating and drinking (a washtub, a dish drainer, a rice washer, a pickles machine, an iron pot, a rice cooker, an electronic rice warmer, a pan, a boiled egg maker, a pot lid, a knob for pot lid, a drop cover for pot, a handle for pot, a kettle, an electric kettle, a sake-heating device, a steamer, a bamboo steamer, a frying pan, an egg fryer, a coffee maker, a cooking grid, a grill plate), cooking utensils (a cooking stove, a range, a microwave oven, an oven, a toaster, a toaster oven, a roaster, an electromagnetic induction cooker, a peeler, a corer for fruits, a grater, a home meat grinder, a slicer, an ice shaver, a cutter for dried-bonito-flakes, a juicer mixer, a juicer, a lemon squeezer, a food mixer, a hand mixer, a whisk, a cocktail shaker, an ice cream maker, a coffee grinder, a spice grinder, a sesame pounding machine, an ice pick, a nutcracker, a noodle making machine for home use, a rice cake making machine, a strainer for cooking, a tea strainer, a dripper, a squeezer for cooking, a can opener, a corkscrew, a sushi molding machine, a molding machine for confectionery products, an ice tray, a handle for kitchen knives, scissors for cooking, a cheese cutter, an egg cutter, a dish washer, a dish dryer, a heat preserving chamber, a refrigerator, a freezer, an ice machine, a water cooler, a dispenser for beverage, a measuring rice tub, a home water purifier, a glass stand, a plate rack, a kitchen knife rack, a glass holder, a bottle stand, an alcohol cradle, a tray, a small diner table, a saucer, a glass holder, a pot stand, a dish stand, a glass thermal cover, a covering for toasters, a napkin holder, a napkin ring, a caster stand, a chopstick case, a chopstick rest, a chopstick holder, a toothpick holder), congratulations-and-condolences goods (a household Shinto altar, an offertory box, a box for fortune slips, an icon, a Buddhist altar, a decoration implement for canopy, a Buddha statue, a rosary, a sutra desk, a bell for Buddhist services, an altar, a gravestone, a grave marker, a coffin, a flower vase for funerals and festivals, a censer for funerals and festivals, a light for funerals and festivals, a candlestick for funerals and festivals, a small offering stand, a talisman, a charm bag, a portable shrine, a bag for congratulation money, a bag for condolence money, a gift wrapping paper, a ceremonial paper string, a Christmas tree, an ornament for Christmas tree, a braid for Christmas), household goods (a sewing spatula, a tailors chalk, a bobbin for sawing, a sawing needle, a pincushion, a sewing box, a thimble, a knitting needle, a jewel box, a ring case, a home sprayer, a nozzle of a home sprayer), furniture (a bed, a hammock, a chair, a bench, a sofa bed, a legless chair, a chair covering, a seat, an outdoor bench, a leg for chairs, an infant walker, a desk, a desk with a chair, a bookrest, a low table, a table, a table leg, a counter, a television rack, a plant stand, a service wagon, a wardrobe, a cabinet, a corner cabinet, a bookshelf, a sideboard, a cupboard, a bureau, a hanging cupboard, a shoe cupboard, a sorting box for clothes, a lacquer low box, a cabinet for commodities, a safe, a portable cashbox, a dial lock for safes, a locker, a clothes-changing basket, a dresser, a full-length mirror, a wall-mounted mirror, a desk stand mirror, a screen, a folding screen, a hat rack stand, a hinge for furniture, a lock for furniture, a pull for furniture, a handle for furniture, a knob for furniture, a shelf receiver for furniture, a shelf board for furniture, a decorative metal fitting for furniture, a door stop for furniture), indoor small arranging boxes (a hook for clothing, a hanger for clothing, a hanger for skirts, a necktie hanger, a towel rail, a duster rail, a hook for hanger boards, a magazine rack, a newspapers rack, an umbrella stand, a slippers stand, a under floor storage), lighting fixtures (an incandescent lamp, an incandescent lamp for ornaments, a sealed beam lamp, an infrared lamp, a halogen lamp, a fluorescent lamp, a glow starter, a sodium lamp, a xenon lamp, a ceiling light, a shade for ceiling lights, a chandelier, a hanging ornaments for chandeliers, a ceiling hanging light, a shade for ceiling hanging lights, a hanging tool for ceiling lights, a ceiling direct mounting light, a shade for ceiling direct mounting lights, a recessed ceiling light, a louver for ceiling lights, a translucent cover for ceiling lights, a wall light, a shade for wall lights, a wall mounting light, a wall direct mounting light, a shade for wall direct mounting lights, a table lamp, a floor lamp, a shade for table lamps, a street light, a pole for street lights, a glove for street lights, a garden light, a gate lamp, a flashlight, a case for flashlights, a pocket light, a portable electric lamp, an oil lamp, a lantern, a candlestick, a garden lantern, a stone garden lantern, a bactericidal lamp, a projector, a spotlight), heaters and coolers (an electric heater, a coal stove, a gas heater, an oil-heater, a combustion cylinder for stoves, a guard for stoves, a warm air heater, a panel heater, an air conditioner, a room cooler, an outdoor unit for air conditioners, a solar water heater, a feed tank for solar water heaters, a brazier, a fireplace, a charcoal basket, an electric foot warmer, a heater for electric foot warmers, a foot heater, a hot water bottle, a body warmer, a foot warmer, a fan, a ceiling fan, a ventilation fan, a filter for ventilation fans, a hood for ventilation fans, a range hood, a dehumidifier, a humidifier, an air cleaner), kitchen and sanitation goods (a kitchen counter, a sink, a kitchen sink, a garbage can for sinks, a drainboard for sinks, a scrubbing brush rack, a disposer, a range table, a draining rack, a water heater to be attached, a heat exchanger for water heater to be attached, a bath heater, an exhaust pipe for bath heaters, a heat exchanger for bath heaters, a bathtub, a bathtub for infants, a bathtub with washing places, a bathtub lid, a bathtub apron, a showerhead, a washing place for bathrooms, a duckboard for bathrooms, a mat for bathrooms, a soap case, a basin to be attached, a hand washing basin to be attached, a wash dresser, a drain plug for washstands, a front sink, a laundry sink, a water drinking stand, a toilet bowl to be attached, a toilet seat, a cover for toilet seat, an urinal to be attached, a bidet, a waste tank, a septic tank, a water tank for flush toilets), a milk receiving box, a mailbox, a fitting for mailbox ports, a newspaper receiving box, a ladder, a step rung for ladders, a footstool, stepladder, toys (a doll, a ship toy, a vehicles toy, an airplane toy, an intellectual training toy, a sounding toy, a jack-in-the-box, a pacifier, a toy firework, a balloon, a windmill toy), goods for play and pastime (a rocking horse, a jungle gym, a swing, seesaw, a slide, a tricycle for children, a car for children, a three-wheel skate, a skipping rope, bamboo stilts, a battledore, a paddle, a top, a bamboo dragonfly, a cup and a ball, a kite, a ball, a beach ball, a buoy for play quoits, quoits, a yoyo, a pachinko game machine, a slot game machine, a billiard table, a go board, a shogi board, a piece for shogi, sugoroku, a baseball game machine, a mah-jongg table, cards, assembly wooden blocks, an assembly play facility, a puzzle ring, blocks, an insertion play facility, a clipping paper, a folded paper, a painting paper), sporting game goods (a baseball ball, a baseball glove, a baseball mitt, a baseball mask, a baseball bat, a tennis racket, a tennis racket frame, a ping-pong racket, a ping-pong table, a shuttlecock, a badminton racket, a badminton racket frame, a golf club, a shaft for golf clubs, a head for golf clubs, a head cover for golf clubs, a bag for golf clubs, a golf tee, skis, a ski pole, a ring for ski pole, a binding for skis, a case for skis, roller skates, a sled for athletic sports, water skis, a surfboard, a regulator for diving, a snorkel for diving, a fin for diving, an archery, an arrow, a bamboo sword, a trunk protector for kendo, an armguard for kendo, a horizontal bar for exercise, a ice ax, a piton, a barbell, an expander, a hunting gun, an air gun), musical instruments (a keyboard instrument, a wind instrument, a stringed instrument, a percussion instrument, a music synthesizer, a music box, a rhythm generator, a metronome, a pitch pipe, a music stand), goods for hobby and pastime (a birdcage, an insect cage, a doghouse, a collar, a water tank for an appreciation fish), calligraphy tools (a paperweight, an inkstone, an inkstone case, a drawing board, a color box, an engraving cutting edge, a spatula for clay works, a map, a globe, an astronomical chart), stationery (a fountain pen, a mechanical pencil, a ball-point pen, a mechanical pencil with a ball-point pen, a pencil, a brush, a paintbrush, a marking pen, a point protector, a clip for writing materials, a chalk holder, an inkstand, an electric pencil sharpener, a rubber, a plastic sheet, a stamp, a rotary stamp, a stamp pad, an abacus, a drafting board, a drawing table, a tracing stand, a drafting machine, a compass, a divider, a protractor, a template, a set square, a curved ruler, a sealing machine for mail, a mail opener, a paper shredder, a stapler, an electric stapler, a punch for office work, an electric punch for office work, a paper cutter, an eyelet punching, a paper knife, a clip for office work, a pin for office work, a drawing-pin, an eyeleteer, an adhesion tape holder, a filing cabinet, a bookstand, bookends, a pencil case, a letter box, a letter rack, a pen tray, a penholder, a stamp case, a seal box, a telephone chart, a desk calendar, a blackboard, an eraser for blackboards), paper products for office work (a slip, an envelope, a magnetic card, a grid sheet, a letter paper, a mount for albums, a mount for slide films, a tag, a mount for business-cards, a greeting card, a postcard, a picture postcard, a Christmas card, a birthday card, a carbonic paper, a draft, a check, a name card holder, a scrapbook, a pocket diary, a diary, a book of slips, a file, a fitting for file, a binder, a fitting for binder, a hanging folder, a writing sheet scissors, a notebook, a sketchbook, a book of letter papers, an album, a negative cover, a check book, a book jacket, books, a pamphlet, a calendar, a catalog, a poster, a handbill, a bookmark, a coupon, a ticket, a check of footgear, a plate, a nameplate, a price card), packaging goods (a can for packaging, a bottle for packaging, a box for packaging, a slack for packaging, a basket for a packaging, an extrusion tube for packaging, a plate for packaging, an ampoule for packaging, a sprayer for packaging, a bag for packaging, a straw bag, a container for packaging, a spare cap of containers for packaging, a lid of containers for packaging, a crown, a frame for packaging, a wrapping paper, a label, a bookmark for packaging, a blind for packaging, a cover paper, a mount for packaging), advertising tools (an advertising apparatus, a billboard, a bulletin board, an advertising light, an advertising balloon, a road sign, a lightning indicator, a scoreboard, a flag, a triangular pennant, a banner, a flag rod, a merchandise display case, a merchandise display shelf, a merchandise display stand, a refrigerator showcase, a mannequin dummy), transportation machine apparatuses (a crane, a conveyor belt, a screw conveyor, a conveyor chain, a winch, a hoist, a chain block, an elevator, an escalator, a jack, a container, a pallet for transportation, a bomb for transportation, a pulley, a rail for transportation machines), vehicles (an engine, a passenger car, a tram, a seat for rail cars, an automobile, a bus, a truck, a dump truck, a loading platform for a truck, a gate plate for tracks, a tractor, a trailer, a fire engine, a garbage collecting vehicle, a truck crane, a snowmobile, a fork lift truck, a headlight for cars, a taillight for cars, a steering wheel for cars, a console for cars, a shift lever for cars, a rim for cars, a wheel for cars, a hub cap for cars, a wheel cap for cars, a muffler for cars, a bumper for cars, a instrument panel for cars, a lock for cars, a window wiper for cars, an alarm for cars, a heater for cars, an air conditioner for cars, a side mirror for cars, a rearview mirror for cars, a sheet for cars, a radiator grille for cars, a tire chain, a fender for cars, a side visor for cars, a sun visor for cars, a roof carrier for cars, a motorcycle, a motor scooter, a three-wheeled automobile, a headlight for motor bicycles, a taillight for motor bicycles, a shock absorber for motor bicycles, a fuel tank for motor bicycles, a muffler for motor bicycles, a reflector mirror for motor bicycles, a saddle for motor bicycles, a windshield for motor bicycles, a bicycle, a frame of bicycles, a fender for bicycles, a handle for bicycles, a brake lever for bicycles, a caliper brake for bicycles, a pedal for bicycles, a saddle for bicycles, a saddle cover for bicycles, an alarm for bicycles, a headlight for bicycles, a taillight for bicycles, a carrier for bicycles, a stand for bicycles, a lock for bicycles, a front fork for bicycles, a rain shelter for bicycles, a bicycle cart, a cart, a baby carriage, a linear motor car), vessels (a passenger boat, a cargo boat, a motorboat, a sailboat, a mast for sailboats, an oar boat, a canoe, a fishing boat, an outboard motor, an airplane, an airship), electric elements (a dry battery, a storage battery, a solar battery, an electric outlet, a table tap, an attachment plug, a socket for pilot lamps, a socket for electron tubes, a connector for printed wiring, a high frequency coaxial connector, a jack, a plug, an inserting crimp terminal, an contactor, a ground rod, a terminal board, a terminal plate, a knob for electric appliances), electric power distribution (an electric power distribution instrument, a control instrument, an electrical cable, an electric wire installation tool, a rotating electrical machine), communication mechanical apparatuses (a telephone, a public telephone, a cellular telephone, a telephone exchanger, an interphone, a telegraph, a teleprinter, a facsimile, a telephotographic apparatus, a communication relay exchanger, a radio communication device, an antenna, a parabolic antenna, a radio receiving set, a tuner for radios, a tape recorder, a graphic equalizer, an earphone, a headphone, a microphone, a microphone stand, a speaker, a speaker box, a television receiving set, a videotape recorder, a videodisc player, a television camera, a television camera with a videotape recorder, a view finder for television cameras, a cassette tape, a videotape, a record, a compact disc, a video disc, a magneto-optical disc, a digital tape, a digital versatile disc), an electronic calculator, an electronic application mechanical instrument, measuring instruments (a tape measure, a slide calipers, a height gage, a micrometer, a dial gage, a block gauge, a scale, a bathroom scale, a thermometer, a clinical thermometer), clocks (a wristwatch, a watchband, a pocket watch, a stopwatch, a table clock, a wall clock), optical instrument devices (a telescope, a binoculars, a microscope, a magnifying glass, a camera, an over head projector), mechanical devices for office work (an electronic desk calculator, a copying machine, a reader for microfilms, a reader printer for microfilms), automatic vending machines (an automatic vending machine for beverages, an automatic vending machine for frozen-foods, an automatic vending machine for cigarette, an automatic vending machine for tickets, an automatic vending machine for stamps, a money counting machine for automatic vending machines, a money-changing machine, a cash dispenser, an automatic ticket gate), security mechanical instruments (a dustproof mask, a protection mask, a helmet, a life buoy, a life vest, a fire hydrant, a sensor for fires, a rotation alarm lamp, a traffic signal, a reflector for roads, a reflex mirror for roads, a smoke pot, an oil fence), medical-application mechanical instruments (a mechanical instrument for medical-examination facilities, a machinery for physical therapies, a steel instrument for medical treatments, a mechanical instrument for diagnoses, a mechanical instrument for operations, an operative instrument, a mechanical instrument for dentistry, an instrument for rehabilitation), conveniences and tools (a handheld edged tool, a handheld work tool, a portable power tool, a mechanic tool), mechanical instruments for fishing (a fishing tool, a fishing tackle), mechanical instruments for agriculture (a ground-leveling instrument for agriculture, an instrument for cultivating controls, an instrument for harvest adjustments, a straw smoothing machine), mechanical instruments for stockbreeding (a feed grinder, an automatic feeder for stockbreeding, an automatic water supply machine for stockbreeding, a milking machine), a mining machinery, a construction machinery, mechanical apparatuses for chemical processing (a crushing machine, a grinding machine, a separating and removing machine), civil engineering structures (an asphalt road, a concrete road, a wooden road, a bridge beam, a lock bolt, a sluice gate, a sluice gate door, an elevated tank, a gas tank, a steel tower, a telegraph pole, a scaffold metal fitting for telegraph poles, a band for telegraph poles, a caisson, a block, a sheet pile, a joint part of sheet piles, a boundary block between a sidewalk and a roadway, a concrete flat plate for sidewalks, a curbstone block, a lining plate, an expansion joint part for roads, a safety fence for roads, a plate for guardrails, a snowslide prevention fence, a snow protection fence, a block for bank protection, a foot protective block, a block for wave absorbing, a fender for mooring quays, a floating pier, a floating breakwater, an artificial fishing bank, a block for artificial fishing banks, a manhole lid, a ditch lid, a weir for agriculture, a weir column for agriculture), houses (a tent, a greenhouse, a plastic greenhouse, a bathroom, a sauna room, a handrail of windows, a face grille for windows, stairs, a handrail for stairs, a coping for handrails, a coping receiver for handrails, a stanchion for handrails, a vertical bar for handrails, a balcony, a veranda, a fence for verandas, a porch), outdoor equipments (a gate, a gatepost, a door of gates, a wall, a coping for walls, coping receiver for walls, a fence, a vertical bar for fences, an ornament metal fitting for fences, a garden fence, a high place water tank, a panel of high place water tanks, a torii, a telephone booth, a mailbox), constituent members for constructions (a pillar, a beam, a constituent member of a wall, a constituent member of a ceiling, a constituent member of a floor, a constituent member of a roof, a gutter), fittings (a door, a glass door, a sliding paper door, a sliding paper screen, a window screen, a transom window, a partition for buildings, an accordion door, a sliding door, a hinge for fittings, a crescent lock for fittings, a door closer, a pull of a sliding paper door, a lever handle for fittings, a curtain rail, a curtain liner, a curtain stopper, a blanket for curtains, a hook for curtains, a curtain box, a frame for doors, a doorstop, a frame for sliding doors, a double sliding window frame, a pivoted window frame, a center pillar of a shutter, a guide rail of a shutter for buildings, a case of a shutter for buildings), interior or exterior materials for buildings (a roof tile, a concrete block, a tile, a mosaic tile, a floor board, a ceiling board, a wall board, a shingle, a rope, a chain, a bolt, a nut, a wood screw, a split pin, a metal washer, a nail, a rivet, a clamp, a wedge, a hinge, a lock, a key material, a spring, a caster, a wheel for casters, a pipe for piping, a hose, a hose clamp, a vessel body protective cap, a pipe-supporting metal fitting), etc.

These photocatalyst functional products have a high photocatalytic activity by light irradiation from a visible light source such as a fluorescent light or a sodium lamp, and can be applied for decomposing an organic material and decomposing nitrogen oxide. For example, when the photocatalyst functional product is provided in an interior living environment with lighting, malodorous substances in the environment such as aldehydes, mercaptans, ketones, and ammonia can be decomposed and removed easily.

The present invention will be described in detail below with examples, but the present invention is not limited to these

### examples.

In addition, a measuring method in each example is as follows.

### 1. BET specific surface area

BET specific surface areas of the titanium oxide photocatalyst particles and the tungsten oxide photocatalyst particles were measured by a nitrogen adsorbing method using a specific surface area measuring apparatus (MONOSORB produced by Yuasa Ionics Inc.).

### 2. Average dispersed particle diameter (nm)

A particle size distribution of a sample was measured using a submicron particle size distribution measuring apparatus (N4 Plus produced by Beckman Coulter, Inc.), and automatically analyzed with a monodispersion mode by a software attached to this apparatus. The result was made to be an average dispersed particle diameter.

### 3. Crystal structure

An X-ray diffraction spectrum was measured using an X-ray diffraction apparatus (RINT 2000/PC produced by Rigaku Corporation), and a crystal structure was determined from the spectrum.

### 4. Zeta potential of a photocatalyst

Titanium oxide photocatalyst particles or tungsten oxide photocatalyst particles were dispersed in a sodium chloride aqueous solution (having a sodium chloride concentration of 0.01 mol/L) in which a hydrogen ion concentration was adjusted to have pH value of 3.0 by adding hydrogen chloride, and the zeta potential of the solution was measured using a laser zeta potential meter (ELS-6000 produced by Otsuka Electronics Co., Ltd.). An use amount of the sodium chloride aqueous solution was 250000 mass times with respect to an use amount of the titanium oxide photocatalyst particles or the tungsten oxide photocatalyst particles. When the zeta potential was positive, the surface of the photocatalyst was charged positively, and when the zeta potential was negative, the surface was charged negatively.

### 5. Photocatalytic reaction 1 (acetaldehyde decomposing ability)

The decomposing reaction of acetaldehyde was carried out by taking a measuring sample obtained in each example into a gas bag (having an inner capacity of 1L), sealing the bag, making the inside of the gas bag to be a vacuum state, enclosing a mixed gas of 600 mL in which a volume ratio of oxygen and nitrogen was 1:4 in the gas bag, enclosing nitrogen gas of 3mL containing acetaldehyde by 1 volume % in the gas bag, keeping it in a dark space at a room temperature for 1 hour, and setting the gas bag so that an illuminance near the measuring sample from a commercial white fluorescent light as a light source was to be 1000 lux (measured by an illuminometer "T-10" produced by Konica Minolta Holdings, Inc.). The strength of ultraviolet light near the measuring sample was 6.5 µW/cm² (measured by using an ultraviolet intensity meter "UVR-2" produced by Topcon Corporation in which a light receiving part "UD-36" produced by the same corporation to the meter was attached). The gas in the gas bag was sampled every 1.5 hours after irradiating a fluorescent light, the residual concentration of acetaldehyde was measured by a gas chromatograph (GC-14A produced by Shimadzu Corporation) so as to calculate a first-order rate constant from a decreasing amount of the acetaldehyde concentration with respect to the irradiation time. The calculated first-order rate constant was to be an acetaldehyde decomposing ability When the first-order rate constant is greater, the acetaldehyde decomposing ability is greater.

### 6. Photocatalytic reaction 2 (acetone decomposing ability)

The decomposing reaction of acetone was carried out by taking a measuring sample obtained in each example into a gas bag (having an inner capacity of 1L), sealing the bag, making the inside of the gas bag to be a vacuum state, enclosing the mixed gas of 600 mL in which the volume ratio of oxygen and nitrogen was 1:4 in the gas bag, enclosing nitrogen gas of 1.8mL containing acetone by 1 capacity % in the gas bag, keeping it in a dark space at a room temperature for 1 hour, and setting the gas bag so that a illuminance near the measuring sample from a commercial white fluorescent light as a light source was to be 1000 lux (measured by Illuminometer T-10 produced by Konica Minolta Holdings, Inc.). The strength of ultraviolet light near the measuring sample was 6.5 µW/cm² (measured by using an ultraviolet intensity meter "UVR-2" produced by Topcon Corporation in which a light receiving part "UD-36" produced by the same corporation to the meter was attached). The gas in the gas bag was sampled every 1.5 hours after irradiating the fluorescent light, the residual concentration of acetone was measured by a gas chromatograph (GC-14A produced by Shimadzu Corporation) so as to calculate a first-order rate constant from the decreasing amount of the acetone concentration with respect to the irradiation time. The calculated first-order rate constant was to be an acetone decomposing ability. When the first-order rate constant is greater, the acetone decomposing ability is greater.

### Reference Example 1 [Preparing of titanium oxide photocatalyst particles and its dispersion liquid]

As the titanium oxide photocatalyst particles, metatitanic acid cake (containing a titanium component of 42 mass % in terms of TiO₂) obtained by hydrolyzing a titanyl sulfate aqueous solution and filtrating it was used.

An oxalic acid aqueous solution was obtained by dissolving oxalic acid (produced by Wako Pure Chemical Industries, Ltd.) of 2.70g with water of 60.2g. A mixture was obtained adding the metatitanic acid cake of 57.1g to the oxalic acid aqueous solution and mixing it. The use amount of oxalic acid in this mixture was 0.1 mol with respect to metatitanic acid of 1 mol.

A titanium oxide photocatalyst dispersion liquid was obtained by subjecting the mixture to a dispersion treatment under the following conditions using a medium stirring type dispersing device (4TSG-1/8 produced by Aimex Co.,Ltd.).

Dispersion medium: Beads made of zirconia having an outer diameter of 0.05mm
Treating temperature: 20°C
Treating time: 3 hours
Rotating rate: 2000 rpm

The average dispersed particle diameter of the obtained titanium oxide photocatalyst particles in the titanium oxide photocatalyst dispersion liquid was 85 nm. The hydrogen ion concentration had pH value of 1.6. A solid part was obtained by vacuum-drying a part of this titanium oxide photocatalyst dispersion liquid, and the BET specific surface of this solid part was 325 m²/g. The crystal structure of the solid part of the titanium oxide photocatalyst dispersion liquid was anatase. In addition, when the X-ray diffraction spectra of the mixture before the dispersing treatment and the solid part of the titanium oxide photocatalyst dispersion liquid after the dispersing treatment were measured and compared, the change of the crystal structure due to the dispersing treatment was not observed. The zeta potential of the titanium oxide photocatalyst particles in the titanium oxide photocatalyst dispersion liquid was -19.9mV

### Reference example 2 [Preparing of tungsten oxide photocatalyst particles and its dispersion liquid]

A mixture was obtained by adding a tungsten oxide powder (having a purity of 99.99%, produced by Kojundo Chemical Laboratory Co., Ltd.) of 1kg to ion-exchanged water of 4kg and mixing it. A tungsten oxide photocatalyst dispersion liquid was obtained by subjecting the mixture to a dispersing treatment under the following conditions using a medium stirring type dispersing device (ULTRA APEX MILL UAM-1 1009, produced by Kotobuki Engineering & Manufacturing Co., Ltd.).

Dispersion medium: 1.85 kg beads made of zirconia having an outer diameter of 0.05mm
Stirring rate: 12.6 m/sec. at a circumferential speed
Flowing rate: 0.25 L/min
Treating time: A total of about 50 minutes

The average dispersed particle diameter of the obtained tungsten oxide photocatalyst particles in the tungsten oxide photocatalyst dispersion liquid was 96 nm. The hydrogen ion concentration had pH value of 2.2. A solid part was obtained by vacuum-drying a part of this dispersion liquid, and the BET specific surface of this solid part was 37 m²/g. In addition, when the X-ray diffraction spectra of the mixture before the dispersing treatment and the solid part of the tungsten oxide photocatalyst dispersion liquid after the dispersing treatment were measured and compared, both the crystal structures were WO₃, and the change of the crystal structure due to the dispersing treatment was not observed. The zeta potential of the tungsten oxide photocatalyst particles in the tungsten oxide photocatalyst dispersion liquid was -25.5mV

### Example 1

A photocatalyst dispersion liquid was obtained by mixing the titanium oxide photocatalyst dispersion liquid obtained in the reference example 1 and the tungsten oxide photocatalyst dispersion liquid obtained in the reference example 2 so that the use amount ratio of the titanium oxide photocatalyst particles and the tungsten oxide photocatalyst particles was 1:3 (at mass ratio). A total amount of the titanium oxide photocatalyst particles and the tungsten oxide photocatalyst particles was 5 parts by mass (having a solid part concentration of 5% by mass) in the photocatalyst dispersion liquid of 100 parts by mass. As for this photocatalyst dispersion liquid, the solid-liquid separation was not observed after storing it.

The obtained photocatalyst dispersion liquid was dropped at a glass petri dish (having an outer diameter of 70mm, an inner diameter of 66mm, a height of 14mm, and a capacity of about 48mL) so that the dropping amount in terms of the solid part per an unit area of a bottom face was to be 1 g/m², and developed so as to be uniform on the whole bottom face of the perti dish. Then, a photocatalyst layer was formed on the bottom face of the glass petri dish by drying the liquid for one hour under an atmosphere in a dryer at 110°C. A measuring sample was obtained by irradiating an ultraviolet radiation from a black light to the photocatalyst layer for 16 hours so as to have the ultraviolet radiation strength of 2 mW/cm². When the photocatalytic activity (acetaldehyde decomposing ability) of the measuring sample was evaluated, the first-order rate constant was 0.351h⁻¹.

### Example 2

A photocatalyst dispersion liquid was obtained by a similar process to that of Example 1 except the titanium oxide photocatalyst dispersion liquid obtained in the reference example 1 and the tungsten oxide photocatalyst dispersion liquid obtained in the reference example 2 were mixed so that the use amount ratio of the titanium oxide photocatalyst particles and the tungsten oxide photocatalyst particles was to be 1:1 (at mass ratio). The total amount of the titanium oxide photocatalyst particles and the tungsten oxide photocatalyst particles was 5 parts by mass in the photocatalyst dispersion liquid of 100 parts by mass. A photocatalyst layer was formed by a similar process to that of Example 1 except the photocatalyst dispersion liquid obtained in this example was used instead of the photocatalyst dispersion liquid obtained in Example 1. When the photocatalytic activity (acetaldehyde decomposing ability) was evaluated, the first-order rate constant was 0.372h⁻¹. As for this photocatalyst dispersion liquid, the solid-liquid separation was not observed after storing it.

### Example 3

A photocatalyst dispersion liquid was obtained by a similar process to that of Example 1 except the titanium oxide photocatalyst dispersion liquid obtained in the reference example 1 and the tungsten oxide photocatalyst dispersion liquid obtained in the reference example 2 were mixed so that the use amount ratio of the titanium oxide photocatalyst particles and the tungsten oxide photocatalyst particles was to be 3:1 (at mass ratio). The total amount of the titanium oxide photocatalyst particles and the tungsten oxide photocatalyst particles was 5 parts by mass in the photocatalyst dispersion liquid of 100 parts by mass. A photocatalyst layer was formed by a similar process to that of Example 1 except the photocatalyst dispersion liquid obtained in this example was used instead of the photocatalyst dispersion liquid obtained in Example 1. When the photocatalytic activity (acetaldehyde decomposing ability) was evaluated, the first-order rate constant was 0.282h⁻¹. As for this photocatalyst dispersion liquid, the solid-liquid separation was not observed after storing it.

### Comparative example 1

A photocatalyst dispersion liquid was prepared by a similar process to that of Example 1 except a commercial titanium oxide photocatalyst dispersion liquid (STS-01, produced by Ishihara Sangyo Kaisha Ltd., containing nitric acid, and having an average dispersed particle diameter of 50nm) was used instead of the titanium oxide photocatalyst dispersion liquid obtained in the reference example 1. The total amount of the titanium oxide photocatalyst particles and the tungsten oxide photocatalyst particles was 5 parts by mass in the photocatalyst dispersion liquid of 100 parts by mass. As for this photocatalyst dispersion liquid, particles were aggregated during storing it, and a solid-liquid separation was generated. In addition, the zeta potential of the titanium oxide particles contained in the titanium oxide dispersion liquid (STS-01) was +40.1mV.

### Comparative example 2

A photocatalyst dispersion liquid was prepared by a similar process to that of Example 2 except the same commercial titanium oxide photocatalyst dispersion liquid (STS-01) as that used in comparative example 1 was used instead of the titanium oxide photocatalyst dispersion liquid obtained in the reference example 1. The total amount of the titanium oxide photocatalyst particles and the tungsten oxide photocatalyst particles was 5 parts by mass in the photocatalyst dispersion liquid of 100 parts by mass. As for this photocatalyst dispersion liquid, particles were aggregated during storing it, and a solid-liquid separation was generated.

### Comparative example 3

A photocatalyst dispersion liquid was prepared by a similar process to that of Example 3 except the same commercial titanium oxide photocatalyst dispersion liquid (STS-01) as that used in comparative example 1 was used instead of the titanium oxide photocatalyst dispersion liquid obtained in the reference example 1. The total amount of the titanium oxide photocatalyst particles and the tungsten oxide photocatalyst particles was 5 parts by mass in the photocatalyst dispersion liquid of 100 parts by mass. As for this photocatalyst dispersion liquid, particles were aggregated during storing it, and a solid-liquid separation was generated.

### Example 4

A photocatalyst dispersion liquid was obtained by mixing the titanium oxide photocatalyst dispersion liquid obtained in the reference example 1 and the tungsten oxide photocatalyst dispersion liquid obtained in the reference example 2 so that the use amount ratio of the titanium oxide photocatalyst particles and the tungsten oxide photocatalyst particles was to be 1:3 (at mass ratio), and further adding an aqueous solution of hexachloro platinic acid (H₂PtCl₆) to the mixture. A solid part in the photocatalyst dispersion liquid of 100 parts by mass was 5 parts by mass (the solid part concentration was 5% by mass). An use amount of hexachloro platinic acid was 0.06 parts by mass in terms of the platinum atom with respect to the total use amount of 100 parts by mass of the titanium oxide photocatalyst particles and the tungsten oxide photocatalyst particles. A solid-liquid separation was not observed in this photocatalyst dispersion liquid.

A photocatalyst layer was formed on the bottom face of the glass petri dish so as to obtain a measuring sample by a similar process to that of Example 1 except the photocatalyst dispersion liquid obtained in this example was used instead of the photocatalyst dispersion liquid obtained in Example 1. When the photocatalytic activity (acetaldehyde decomposing ability) of this sample was evaluated, the first-order rate constant was 0.382h⁻¹.

### Example 5

A photocatalyst dispersion liquid was obtained by a similar process to that of Example 4 except the titanium oxide photocatalyst dispersion liquid obtained in the reference example 1 and the tungsten oxide photocatalyst dispersion liquid obtained in the reference example 2 were mixed so that the use amount ratio of the titanium oxide photocatalyst particles and the tungsten oxide photocatalyst particles was to be 1:1 (at mass ratio). The total amount of the titanium oxide photocatalyst particles and the tungsten oxide photocatalyst particles was 5 parts by mass in the photocatalyst dispersion liquid of 100 parts by mass. As for this photocatalyst dispersion liquid, the solid-liquid separation was not observed after storing it.

A photocatalyst layer was formed by a similar process to that of Example 1 except the photocatalyst dispersion liquid obtained in this example was used instead of the photocatalyst dispersion liquid obtained in Example 1. When the photocatalytic activity (acetaldehyde decomposing ability) was evaluated, the first-order rate constant was 0.625h⁻¹.

### Example 6

A photocatalyst dispersion liquid was obtained by a similar process to that of Example 4 except the titanium oxide photocatalyst dispersion liquid obtained in the reference example 1 and the tungsten oxide photocatalyst dispersion liquid obtained in the reference example 2 were mixed so that the use amount ratio of the titanium oxide photocatalyst particles and the tungsten oxide photocatalyst particles was to be 3:1 (at mass ratio). The total amount of the titanium oxide photocatalyst particles and the tungsten oxide photocatalyst particles was 5 parts by mass in the photocatalyst dispersion liquid of 100 parts by mass. As for this photocatalyst dispersion liquid, the solid-liquid separation was not observed after storing it.

A photocatalyst layer was formed by a similar process to that of Example 1 except the photocatalyst dispersion liquid obtained in this example was used instead of the photocatalyst dispersion liquid obtained in Example 1. When the photocatalytic activity (acetaldehyde decomposing ability) was evaluated, the first-order rate constant was 0.380h⁻¹.

### Example 7

A photocatalyst dispersion liquid was obtained by a similar process to that of Example 5 except the use amount of the aqueous solution of hexachloro platinic acid (H₂PtCl₆) was 0.03 parts by mass in terms of the platinum atom with respect to the total use amount of 100 parts by mass of the titanium oxide photocatalyst particles and the tungsten oxide photocatalyst particles. The total amount of the titanium oxide photocatalyst particles and the tungsten oxide photocatalyst particles was 5 parts by mass in the photocatalyst dispersion liquid of 100 parts by mass. As for this photocatalyst dispersion liquid, the solid-liquid separation was not observed after storing it.

A photocatalyst layer was formed by a similar process to that of Example 1 except the photocatalyst dispersion liquid obtained in this example was used instead of the photocatalyst dispersion liquid obtained in Example 1. When the photocatalytic activity (acetaldehyde decomposing ability) was evaluated, the first-order rate constant was 0.451h⁻¹.

### Example 8

A photocatalyst dispersion liquid was obtained by a similar process to that of Example 5 except the use amount of the aqueous solution of hexachloro platinic acid (H₂PtCl₆) was 0.1 parts by mass in terms of the platinum atom with respect to the total use amount of 100 parts by mass of the titanium oxide photocatalyst particles and the tungsten oxide photocatalyst particles. The total amount of the titanium oxide photocatalyst particles and the tungsten oxide photocatalyst particles was 5 parts by mass in the photocatalyst dispersion liquid of 100 parts by mass. As for this photocatalyst dispersion liquid, the solid-liquid separation was not observed after storing it.

A photocatalyst layer was formed by a similar process to that of Example 1 except the photocatalyst dispersion liquid obtained in this example was used instead of the photocatalyst dispersion liquid obtained in Example 1. When the photocatalytic activity (acetaldehyde decomposing ability) was evaluated, the first-order rate constant was 0.551h⁻¹.

### Example 9

A photocatalyst dispersion liquid was obtained by a similar process to that of Example 5 except the use amount of the aqueous solution of hexachloro platinic acid (H₂PtCl₆) was 0. 3 parts by mass in terms of the platinum atom with respect to the total use amount of 100 parts by mass of the titanium oxide photocatalyst particles and the tungsten oxide photocatalyst particles. The total amount of the titanium oxide photocatalyst particles and the tungsten oxide photocatalyst particles was 5 parts by mass in the photocatalyst dispersion liquid of 100 parts by mass. As for this photocatalyst dispersion liquid, the solid-liquid separation was not observed after storing it.

A photocatalyst layer was formed by a similar process to that of Example 1 except the photocatalyst dispersion liquid obtained in this example was used instead of the photocatalyst dispersion liquid obtained in Example 1. When the photocatalytic activity (acetaldehyde decomposing ability) was evaluated, the first-order rate constant was 0.451h⁻¹.

### Example 10

A photocatalyst dispersion liquid was obtained by mixing the titanium oxide photocatalyst dispersion liquid obtained in the reference example 1 and the tungsten oxide photocatalyst dispersion liquid obtained in the reference example 2 so that the use amount ratio of the titanium oxide photocatalyst particles and the titanium oxide photocatalyst particles was to be 1:3 (at mass ratio), and further adding an aqueous solution of copper nitrate (Cu(NO₃)₂) to the mixture. A total amount of the titanium oxide photocatalyst oxide particles and the tungsten oxide photocatalyst particles was 5 parts by mass (having a solid part concentration of 5% by mass) in the photocatalyst dispersion liquid of 100 parts by mass. The use amount of the copper nitrate aqueous solution was 0.03 parts by mass in terms of the copper atom with respect to the total use amount of 100 parts by mass of the titanium oxide photocatalyst particles and the tungsten oxide photocatalyst particles. A solid-liquid separation was not observed in this photocatalyst dispersion liquid.

A photocatalyst layer was formed on the bottom face of the glass petri dish so as to obtain a measuring sample by a similar process to that of Example 1 except the photocatalyst dispersion liquid obtained in this example was used instead of the photocatalyst dispersion liquid obtained in Example 1. When the photocatalytic activity (acetaldehyde decomposing ability) of this sample was evaluated, the first-order rate constant was 0.407h⁻¹.

### Example 11

A photocatalyst dispersion liquid was obtained by a similar process to that of Example 10 except the use amount of the aqueous solution of copper nitrate was 0.06 parts by mass in terms of the copper atom with respect to the total use amount of 100 parts by mass of the titanium oxide photocatalyst particles and the tungsten oxide photocatalyst particles. The total amount of the titanium oxide photocatalyst particles and the tungsten oxide photocatalyst particles was 5 parts by mass in the photocatalyst dispersion liquid of 100 parts by mass. As for this photocatalyst dispersion liquid, the solid-liquid separation was not observed after storing it.

A photocatalyst layer was formed by a similar process to that of Example 1 except the photocatalyst dispersion liquid obtained in this example was used instead of the photocatalyst dispersion liquid obtained in Example 1. When the photocatalytic activity (acetaldehyde decomposing ability) was evaluated, the first-order rate constant was 0.408h⁻¹.

### Example 12

A photocatalyst dispersion liquid was obtained by a similar process to that of Example 10 except titanium oxide photocatalyst dispersion liquid obtained in the reference example 1 and the tungsten oxide photocatalyst dispersion liquid obtained in the reference example 2 were mixed so that the use amount ratio of the titanium oxide photocatalyst particles and the tungsten oxide photocatalyst particles was to be 1:1 (at mass ratio), and the use amount of the aqueous solution of copper nitrate was 0.01 parts by mass in terms of the copper atom with respect to the total use amount of 100 parts by mass of the titanium oxide photocatalyst particles and the tungsten oxide photocatalyst particles. The total amount of the titanium oxide photocatalyst particles and the tungsten oxide photocatalyst particles was 5 parts by mass in the photocatalyst dispersion liquid of 100 parts by mass. As for this photocatalyst dispersion liquid, the solid-liquid separation was not observed after storing it.

A photocatalyst layer was formed by a similar process to that of Example 1 except the photocatalyst dispersion liquid obtained in this example was used instead of the photocatalyst dispersion liquid obtained in Example 1. When the photocatalytic activity (acetaldehyde decomposing ability) was evaluated, the first-order rate constant was 0.394h⁻¹.

### Example 13

A photocatalyst dispersion liquid was obtained by a similar process to that of Example 12 except the use amount of the aqueous solution of copper nitrate was 0.03 parts by mass in terms of the copper atom with respect to the total use amount of 100 parts by mass of the titanium oxide photocatalyst particles and tungsten oxide photocatalyst particles. The total amount of the titanium oxide photocatalyst particles and the tungsten oxide photocatalyst particles was 5 parts by mass in the photocatalyst dispersion liquid of 100 parts by mass. As for this photocatalyst dispersion liquid, the solid-liquid separation was not observed after storing it.

A photocatalyst layer was formed by a similar process to that of Example 1 except the photocatalyst dispersion liquid obtained in this example was used instead of the photocatalyst dispersion liquid obtained in Example 1. When the photocatalytic activity (acetaldehyde decomposing ability) was evaluated, the first-order rate constant was 0.396h⁻¹.

### Reference example 3 [Preparing of titanium oxide photocatalyst particles and its dispersion liquid]

As the titanium oxide photocatalyst particles, metatitanic acid cake (containing a titanium component of 45 mass % in terms of TiO₂) obtained by hydrolyzing a titanyl sulfate aqueous solution and filtrating it was used.

An oxalic acid aqueous solution was obtained by dissolving oxalic acid dihydrate (produced by Wako Pure Chemical Industries, Ltd.) of 158g with water of 1.88kg. A mixture was obtained adding the metatitanic acid cake of 2.2kg to the oxalic acid aqueous solution and mixing it. The use amount of oxalic acid in this mixture was 0.1 mol with respect to metatitanic acid of 1 mol.

A titanium oxide photocatalyst dispersion liquid was obtained by subjecting the mixture to a dispersing treatment under the following conditions using a medium stirring type dispersing device (ULTRA APEX MILL UAM-1 1009, produced by Kotobuki Engineering & Manufacturing Co., Ltd.).

Dispersion medium: 1.85 kg beads made of zirconia having an outer diameter of 0.05mm
Stirring rate: 12.6 m/sec. at a circumferential speed
Flowing rate: 0.25 L/min
Adding water: After 17 minutes from beginning of a treatment, water of 5kg was added.
Treating time: A total of about 90 minutes

The average dispersed particle diameter of the obtained titanium oxide photocatalyst particles in the titanium oxide photocatalyst dispersion liquid was 55 nm. The hydrogen ion concentration had pH value of 1.5. A solid part was obtained by vacuum-drying a part of this titanium oxide photocatalyst dispersion liquid, and the BET specific surface of this solid part was 301 m²/g. The crystal structure of the solid part of the titanium oxide photocatalyst dispersion liquid was anatase. In addition, when X-ray diffraction spectra of the mixture before the dispersing treatment and the solid part of the titanium oxide photocatalyst dispersion liquid after the dispersing treatment were measured and compared, the change of the crystal structure due to the dispersing treatment was not observed. The zeta potential of the titanium oxide photocatalyst particles in the titanium oxide photocatalyst dispersion liquid was -10.5mV

### Reference example 4 [Preparing of tungsten oxide photocatalyst particles and its dispersion liquid]

Tungsten oxide particles were obtained by burning ammonium paratungstate (produced by NIPPON INORGANIC COLOUR & CHEMICAL CO.,LTD) at 700°C for 6 hours in air. A mixture was obtained by adding the tungsten oxide particles of 1kg to ion-exchanged water of 4kg and mixing those. A tungsten oxide photocatalyst dispersion liquid was obtained by subjecting the mixture to a dispersing treatment under the following conditions using a medium stirring type dispersing device (ULTRA APEX MILL UAM-1 1009, produced by Kotobuki Engineering & Manufacturing Co., Ltd.).

Dispersion medium: 1.85 kg beads made of zirconia having an outer diameter of 0.05mm
Stirring rate: 12.6 m/sec. at a circumferential speed
Flowing rate: 0.25 L/min
Treating time: A total of about 50 minutes

The average dispersed particle diameter of the tungsten oxide photocatalyst particles in the tungsten oxide photocatalyst dispersion liquid was 114 nm. The hydrogen ion concentration had pH value of 2.6. A solid part was obtained by vacuum-drying a part of this dispersion liquid, and the BET specific surface of this solid part was 34 m²/g. In addition, when the X-ray diffraction spectra of the mixture before the dispersing treatment and the solid part of the titanium oxide photocatalyst dispersion liquid after the dispersing treatment were measured and compared, both the crystal structures were WO₃, and the change of the crystal structure due to the dispersing treatment was not observed. The zeta potential of the tungsten oxide photocatalyst particles in the tungsten oxide photocatalyst dispersion liquid was -10.3mV

### Example 14

A photocatalyst dispersion liquid was obtained by a similar process to that of Example 2 except the titanium oxide photocatalyst dispersion liquid obtained in the reference example 3 and the tungsten oxide photocatalyst dispersion liquid obtained in the reference example 4 were mixed so that the use amount ratio of the titanium oxide photocatalyst particles and the tungsten oxide photocatalyst particles was to be 1:1 (at mass ratio). The total amount of the titanium oxide photocatalyst particles and the tungsten oxide photocatalyst particles was 5 parts by mass in the photocatalyst dispersion liquid of 100 parts by mass. A photocatalyst layer was formed by a similar process to that of Example 1 except the photocatalyst dispersion liquid obtained in this example was used instead of the photocatalyst dispersion liquid obtained in Example 1. When the photocatalytic activity (acetaldehyde decomposing ability) was evaluated, the first-order rate constant was 0.380h⁻¹. As for this photocatalyst dispersion liquid, a solid-liquid separation was not observed after storing it.

### Example 15

A photocatalyst dispersion liquid was obtained by mixing the titanium oxide photocatalyst dispersion liquid obtained in the reference example 3 and the tungsten oxide photocatalyst dispersion liquid obtained in the reference example 4 so that the use amount ratio of the titanium oxide photocatalyst particles and the tungsten oxide photocatalyst particles was to be 1:1 (at mass ratio), and further adding an aqueous solution of hexachloro platinic acid (H₂PtCl₆) to the mixture. The solid part in the photocatalyst dispersion liquid of 100 parts by mass was 5 parts by mass (the solid part concentration was 5% by mass). The use amount of hexachloro platinic acid was 0.1 parts by mass in terms of the platinum atom with respect to the total use amount of 100 parts by mass of the titanium oxide photocatalyst particles and the tungsten oxide photocatalyst particles. A solid-liquid separation was not observed in this photocatalyst dispersion liquid.

A photocatalyst layer was formed on the bottom face of the glass petri dish so as to obtain a measuring sample by a similar process to that of Example 1 except the photocatalyst dispersion liquid obtained in this example was used instead of the photocatalyst dispersion liquid obtained in Example 1. When the photocatalytic activity (acetaldehyde decomposing ability) of this sample was evaluated, the first-order rate constant was 0.622h⁻¹.

### Example 16

A photocatalyst dispersion liquid was obtained by mixing the titanium oxide photocatalyst dispersion liquid obtained in the reference example 3 and the tungsten oxide photocatalyst dispersion liquid obtained in the reference example 4 so that the use amount ratio of the titanium oxide photocatalyst particles and the tungsten oxide photocatalyst particles was to be 1:1 (at mass ratio), and further adding an aqueous solution of tetrachloroaurate (HAuCl₄) to the mixture. The solid part in the photocatalyst dispersion liquid of 100 parts by mass was 5 parts by mass (the solid part concentration was 5% by mass). The use amount of tetrachloroaurate was 0.1 parts by mass in terms of the gold atom with respect to the total use amount of 100 parts by mass of the titanium oxide photocatalyst particles and the tungsten oxide photocatalyst particles. A solid-liquid separation was not observed in this photocatalyst dispersion liquid.

A photocatalyst layer was formed on the bottom face of the glass petri dish so as to obtain a measuring sample by a similar process to that of Example 1 except the photocatalyst dispersion liquid obtained in this example was used instead of the photocatalyst dispersion liquid obtained in Example 1. When the photocatalytic activity (acetaldehyde decomposing ability) of this sample was evaluated, the first-order rate constant was 0.587h⁻¹.

### Example 17

A photocatalyst dispersion liquid was obtained by mixing the titanium oxide photocatalyst dispersion liquid obtained in the reference example 3 and the tungsten oxide photocatalyst dispersion liquid obtained in the reference example 4 so that the use amount ratio of the titanium oxide photocatalyst particles and the tungsten oxide photocatalyst particles was to be 1:1 (at mass ratio), and further adding a hydrochloric acid aqueous solution of palladium chloride (PdCl₂) (obtained by a dissolving PdCl₂ powder of 0.252g with a hydrochloric acid aqueous solution of 9.41g having a concentration of 1 mol/L and water of 90.43g) to the mixture. The solid part in the photocatalyst dispersion liquid of 100 parts by mass was 5 parts by mass (the solid part concentration was 5% by mass). The use amount of palladium chloride was 0.1 parts by mass in terms of the palladium atom with respect to the total use amount of 100 parts by mass of the titanium oxide photocatalyst particles and the tungsten oxide photocatalyst particles. A solid-liquid separation was not observed in this photocatalyst dispersion liquid.

A photocatalyst layer was formed on the bottom face of the glass petri dish so as to obtain a measuring sample by a similar process to that of Example 1 except the photocatalyst dispersion liquid obtained in this example was used instead of the photocatalyst dispersion liquid obtained in Example 1. When the photocatalytic activity (acetaldehyde decomposing ability) of this sample was evaluated, the first-order rate constant was 0.652h⁻¹.

### Example 18

A photocatalyst dispersion liquid was obtained by mixing the titanium oxide photocatalyst dispersion liquid obtained in the reference example 3 and the tungsten oxide photocatalyst dispersion liquid obtained in the reference example 4 so that the use amount ratio of the titanium oxide photocatalyst particles and the tungsten oxide photocatalyst particles was to be 1:1 (at mass ratio), and further adding an aqueous solution of hydrogen tetrachloroaurate (HAuCl₄) and the hydrochloric acid aqueous solution of palladium chloride (PdCl₂) used in Example 17 to the mixture. The solid part in the photocatalyst dispersion liquid of 100 parts by mass was 5 parts by mass (the solid part concentration was 5% by mass). The use amount of hydrogen tetrachloroaurate was 0.067 parts by mass in terms of the gold atom with respect to the total use amount of 100 parts by mass of the titanium oxide photocatalyst particles and the tungsten oxide photocatalyst particles. The use amount of palladium chloride was 0.033 parts by mass in terms of the palladium atom with respect to the total use amount of 100 parts by mass of the titanium oxide photocatalyst particles and the tungsten oxide photocatalyst particles. A solid-liquid separation was not observed in this photocatalyst dispersion liquid.

A photocatalyst layer was formed on the bottom face of the glass petri dish so as to obtain a measuring sample by a similar process to that of Example 1 except the photocatalyst dispersion liquid obtained in this example was used instead of the photocatalyst dispersion liquid obtained in Example 1. When the photocatalytic activity (acetaldehyde decomposing ability) of this sample was evaluated, the first-order rate constant was 0.662h⁻¹.

### Example 19

A photocatalyst dispersion liquid was obtained by mixing the titanium oxide photocatalyst dispersion liquid obtained in the reference example 3 and the tungsten oxide photocatalyst dispersion liquid obtained in the reference example 4 so that the use amount ratio of the titanium oxide photocatalyst particles and the tungsten oxide photocatalyst particles was to be 1:1 (at mass ratio), and further adding an aqueous solution of hydrogen tetrachloroaurate (HAuCl₄) to the mixture. The solid part in the photocatalyst dispersion liquid of 100 parts by mass was 5 parts by mass (the solid part concentration was 5% by mass). The use amount of hydrogen tetrachloroaurate was 0.1 parts by mass in terms of the gold atom with respect to the total use amount of 100 parts by mass of the titanium oxide photocatalyst particles and the tungsten oxide photocatalyst particles. A solid-liquid separation was not observed in this photocatalyst dispersion liquid.

The photocatalyst dispersion liquid of 30g was transferred to a beaker of 100mL, and irradiated with an ultraviolet radiation for 3 hours by an ultrahigh pressure mercury lamp (produced by Ushio Inc., lamp house: MPL-25101, an ultrahigh pressure mercury lamp: USH-250BY, a lamp power source: HB-25103BY) while stirring it. The hydrogen tetrachloroaurate was reduced to gold by the light irradiation, and the color of the dispersion liquid was changed from cream to lavender color. A solid-liquid separation was not observed in this photocatalyst dispersion liquid after irradiation of the ultraviolet radiation.

A photocatalyst layer was formed on the bottom face of the glass petri dish so as to obtain a measuring sample by a similar process to that of Example 1 except the photocatalyst dispersion liquid obtained in this example was used instead of the photocatalyst dispersion liquid obtained in Example 1. When the photocatalytic activity (acetaldehyde decomposing ability) of this sample was evaluated, the first-order rate constant was 0.750h⁻¹. Example 20

A photocatalyst dispersion liquid was obtained by mixing the titanium oxide photocatalyst dispersion liquid obtained in the reference example 3 and the tungsten oxide photocatalyst dispersion liquid obtained in the reference example 4 so that the use amount ratio of the titanium oxide photocatalyst particles and the tungsten oxide photocatalyst particles was to be 1:1 (at mass ratio), and further adding an aqueous solution of hydrogen tetrachloroaurate (HAuCl₄) and the hydrochloric acid aqueous solution of palladium chloride (PdCl₂) used in Example 17 to the mixture. The solid part in the photocatalyst dispersion liquid of 100 parts by mass was 5 parts by mass (the solid part concentration was 5% by mass). The use amount of hydrogen tetrachloroaurate was 0.067 parts by mass in terms of the gold atom with respect to the total use amount of 100 parts by mass of the titanium oxide photocatalyst particles and the tungsten oxide photocatalyst particles. The use amount of palladium chloride was 0.033 parts by mass in terms of the palladium atom with respect to the total use amount of 100 parts by mass of the titanium oxide photocatalyst particles and the tungsten oxide photocatalyst particles. A solid-liquid separation was not observed in this photocatalyst dispersion liquid.

The photocatalyst dispersion liquid of 30g was transferred to a beaker of 100mL, and irradiated with ultraviolet radiation for 3 hours while stirring it by a similar method to that of Example 19. The hydrogen tetrachloroaurate and the palladium chloride were reduced to gold and palladium respectively by the light irradiation, and the color of the dispersion liquid was changed from cream to gray. A solid-liquid separation was not observed in this photocatalyst dispersion liquid after the irradiation of ultraviolet radiation.

A photocatalyst layer was formed on the bottom face of the glass petri dish so as to obtain a measuring sample by a similar process to that of Example 1 except the photocatalyst dispersion liquid obtained in this example was used instead of the photocatalyst dispersion liquid obtained in Example 1. When the photocatalytic activity (acetaldehyde decomposing ability) of this sample was evaluated, the first-order rate constant was 0.805h⁻¹.

### Example 21

A photocatalyst dispersion liquid was obtained by mixing the titanium oxide photocatalyst dispersion liquid obtained in the reference example 3 and the tungsten oxide photocatalyst dispersion liquid obtained in the reference example 4 so that the use amount ratio of the titanium oxide photocatalyst particles and the tungsten oxide photocatalyst particles was to be 1:1 (at mass ratio), and further adding an aqueous solution of hydrogen tetrachloroaurate (HAuCl₄) and the hydrochloric acid aqueous solution of palladium chloride (PdCl₂) used in Example 17 to the mixture. The solid part in the photocatalyst dispersion liquid of 100 parts by mass was 5 parts by mass (the solid part concentration was 5% by mass). The use amount of hydrogen tetrachloroaurate was 0.02 parts by mass in terms of the gold atom with respect to the total use amount of 100 parts by mass of the titanium oxide photocatalyst particles and the tungsten oxide photocatalyst particles. The use amount of palladium chloride was 0.01 parts by mass in terms of the palladium atom with respect to the total use amount of 100 parts by mass of the titanium oxide photocatalyst particles and the tungsten oxide photocatalyst particles. A solid-liquid separation was not observed in this photocatalyst dispersion liquid.

The photocatalyst dispersion liquid of 30g was transferred to a beaker of 100mL, and irradiated with an ultraviolet radiation for 3 hours while stirring it by a similar method to that of Example 19. The hydrogen tetrachloroaurate and the palladium chloride were reduced to gold and palladium respectively by the light irradiation, and the color of the dispersion liquid was changed from cream to gray. A solid-liquid separation was not observed in this photocatalyst dispersion liquid after the irradiation of ultraviolet radiation.

A photocatalyst layer was formed on the bottom face of the glass petri dish so as to obtain a measuring sample by a similar process to that of Example 1 except the photocatalyst dispersion liquid obtained in this example was used instead of the photocatalyst dispersion liquid obtained in Example 1. When the photocatalytic activity (acetaldehyde decomposing ability) of this sample was evaluated, the first-order rate constant was 0.719h⁻¹.

### Comparative example 4

A photocatalyst dispersion liquid was obtained by a similar process to that of Example 14 except the commercial titanium oxide photocatalyst dispersion liquid (STS-01) used in Comparative example 1 was used instead of the titanium oxide photocatalyst dispersion liquid obtained in the reference example 3. The total amount of the titanium oxide photocatalyst particles and the tungsten oxide photocatalyst particles in the photocatalyst dispersion liquid of 100 parts by mass was 5 parts by mass. As for this photocatalyst dispersion liquid, particles were aggregated during storing, and a solid-separation was generated.

### Example 22

The photocatalyst dispersion liquid obtained in Example 14 was dropped in a glass petri dish (having an outer diameter of 70mm, an inner diameter of 66mm, a height of 14mm, and a capacity of about 48mL) so that the dropping amount in terms of the solid part per an unit area of a bottom face was to be 1 g/m², and the dropped liquid was developed so as to be uniform on the whole bottom face of the perti dish. Then, a photocatalyst layer was formed on the bottom face of the glass petri dish by drying the liquid for one hour under an atmosphere in a dryer at 110°C. A measuring sample was obtained by irradiating an ultraviolet radiation from a black light to the photocatalyst layer for 16 hours so as to have the ultraviolet radiation strength of 2 mW/cm². When the photocatalytic activity (acetone decomposing ability) of the measuring sample was evaluated, the first-order rate constant was 0.117h⁻¹.

### Example 23

The photocatalyst dispersion liquid obtained in Example 19 was dropped in a glass petri dish (having an outer diameter of 70mm, an inner diameter of 66mm, a height of 14mm, and a capacity of about 48mL) so that the dropping amount in terms of the solid part per an unit area of a bottom face was to be 1 g/m², and the dropped liquid was developed so as to be uniform on the whole bottom face of the perti dish. Then, a photocatalyst layer was formed on the bottom face of the glass petri dish by drying the liquid for one hour under an atmosphere in a dryer at 110°C. A measuring sample was obtained by irradiating an ultraviolet radiation from a black light to the photocatalyst layer for 16 hours so as to have the ultraviolet radiation strength of 2 mW/cm².
When the photocatalytic activity (acetone decomposing ability) of the measuring sample was evaluated, the first-order rate constant was 0.127h⁻¹.

### Example 24

The photocatalyst dispersion liquid obtained in Example 21 was dropped at a glass petri dish (having an outer diameter of 70mm, an inner diameter of 66mm, a height of 14mm, and a capacity of about 48mL) so that the dropping amount in terms of the solid part per an unit area of a bottom face was to be 1 g/m², and the dropped liquid was developed so as to be uniform on the whole bottom face of the perti dish. Then, a photocatalyst layer was formed on the bottom face of the glass petri dish by drying the liquid for one hour under an atmosphere in a dryer at 110°C. A measuring sample was obtained by irradiating an ultraviolet radiation from a black light to the photocatalyst layer for 16 hours so as to have the ultraviolet radiation strength of 2 mW/cm². When the photocatalytic activity (acetone decomposing ability) of the measuring sample was evaluated, the first-order rate constant was 0.160h⁻¹.

### Example 25

When each photocatalyst dispersion liquid obtained in Examples 1 to 24 was coated and dried on a ceiling material, the volatile organic substance concentration of formaldehyde, acetaldehyde, acetone or the like and the concentration of a malodorous substance in an internal space could be reduced by the light irradiation from an interior lighting, and pathogenic bacteria such as staphylococcus aureus, coliform bacillus, or the like could be killed.

### Example 26

When each photocatalyst dispersion liquid obtained in Examples 1 to 24 was coated and dried on a tile, the volatile organic substance concentration of formaldehyde, acetaldehyde, acetone, or the like and the concentration of a malodorous substance in an internal space could be reduced by the light irradiation from an interior lighting, and pathogenic bacteria such as staphylococcus aureus, coliform bacillus or the like could be killed.

### Example 27

When each photocatalyst dispersion liquid obtained in Examples 1 to 24 was coated and dried on a glass, the volatile organic substance concentration of formaldehyde, acetaldehyde, acetone, or the like and the concentration of a malodorous substance in an internal space could be reduced by the light irradiation from an interior lighting, and pathogenic bacteria such as staphylococcus aureus, coliform bacillus or the like could be killed.

### Example 28

When each photocatalyst dispersion liquid obtained in Examples 1 to 24 was coated and dried on a wallpaper, the volatile organic substance concentration of formaldehyde, acetaldehyde, acetone, or the like and the concentration of a malodorous substance in an internal space could be reduced by the light irradiation from an interior lighting, and pathogenic bacteria such as staphylococcus aureus, coliform bacillus, or the like could be killed.

### Example 29

When each photocatalyst dispersion liquid obtained in Examples 1 to 24 was coated and dried on a floor, the volatile organic substance concentration of formaldehyde, acetaldehyde, acetone, or the like and the concentration of a malodorous substance in an internal space could be reduced by the light irradiation from an interior lighting, and pathogenic bacteria such as staphylococcus aureus, coliform bacillus or the like could be killed.

### Example 30

When each photocatalyst dispersion liquid obtained in Examples 1 to 24 was coated and dried on a surfaces of automobile upholsteries such as an automobile instrument panel, an automobile sheet, an automobile ceiling material, and the like, the volatile organic substance concentration of formaldehyde, acetaldehyde, acetone or the like and the concentration of a malodorous substance in a space inside a vehicle could be reduced by the light irradiation from a lighting inside a vehicle, and pathogenic bacteria such as staphylococcus aureus, coliform bacillus and the like could be killed.

## Claims

1. A photocatalyst dispersion liquid comprising titanium oxide photocatalyst particles and tungsten oxide photocatalyst particles dispersed in a dispersion medium, the surfaces of the titanium oxide photocatalyst particles and the tungsten oxide photocatalyst particles being charged in the same polarity.

2. A photocatalyst dispersion liquid according to claim 1, further comprising an electron-withdrawing substance or a precursor thereof.

3. A photocatalyst dispersion liquid according to claim 2, wherein the electron-withdrawing substance or precursor thereof is a particle of at least one metal or compound thereof selected from Cu, Pt, Au, Pd, Ag, Fe, Nb, Ru, Ir, Rh, Co and compounds thereof.

4. A photocatalyst dispersion liquid according to claim 2 or claim 3 wherein the amount of the electron-withdrawing substance or precursor thereof is 0.005 parts by mass to 0.6 parts by mass in terms of metal atom(s) with respect to 100 parts by mass as the total of the titanium oxide photocatalyst particles and the tungsten oxide photocatalyst particles.

5. A photocatalyst dispersion liquid according to any one of claims 1 to 4 wherein the average dispersed particle diameter of the titanium oxide photocatalyst particles is from 20nm to 150nm.

6. A photocatalyst dispersion liquid according to any one of claims 1 to 5 wherein the BET specific surface area of the titanium oxide photocatalyst particles is from 100 m²/g to 500 m²/g.

7. A photocatalyst dispersion liquid according to any one of claims 1 to 6 wherein the average dispersed particle diameter of the tungsten oxide photocatalyst particles is from 50nm to 200nm.

8. A photocatalyst dispersion liquid according to any one of claims 1 to 7 wherein the BET specific surface area of the tungsten oxide photocatalyst particles is from 5 m²/g to 100 m²/g.

9. A photocatalyst dispersion liquid according to any one of claims 1 to 8 wherein the mass ratio of the titanium oxide photocatalyst particles to the tungsten oxide photocatalyst particles is 4:1 to 1:8.

10. A photocatalyst dispersion liquid according to any one of claims 1 to 9 wherein the mass of the dispersion medium is from 5 times to 200 times the total of the mass of the titanium oxide photocatalyst particles and the mass of the tungsten oxide photocatalyst particles.

11. A photocatalyst dispersion liquid according to any one of claims 1 to 10 having a hydrogen ion concentration corresponding to a pH value of 0.5 to 8.0.

12. A process of producing a photocatalyst dispersion liquid according to any one of claims 1 to 11 comprising the steps of:
(a) dispersing titanium oxide photocatalyst particles having positively charged surfaces in a solution of a surface treating agent capable of causing the surfaces of the titanium oxide photocatalyst particles to be negatively charged dissolved in the dispersion medium to obtain a dispersion; and
(b) mixing tungsten oxide photocatalyst particles having negatively charged surfaces with the dispersion.

13. A process according to claim 12, further comprising, after step (b), the step of:
(c) adding an electron-withdrawing substance or its precursor to the dispersion.

14. A process according to claim 13 wherein the electron-withdrawing substance or precursor thereof is a particle of at least one metal or compound thereof selected from Cu, Pt, Au, Pd, Ag, Fe, Nb, Ru, Ir, Rh, Co and compounds thereof.

15. A process according to claim 13 or claim 14 wherein the amount of the electron-withdrawing substance or precursor thereof is 0.005 parts by mass to 0.6 parts by mass in terms of metal atom(s) with respect to 100 parts by mass as the total of the titanium oxide photocatalyst particles and the tungsten oxide photocatalyst particles.

16. A process according to any one of claims 13 to 15 further comprising, after step (c), the step of:
(d) carrying out light irradiation.

17. A process of producing a photocatalyst functional product by:
coating a photocatalyst dispersion liquid according to any one of claims 1 to 11 or produced according to any one of claims 12 to 16 on a surface of a base material and
volatilizing the dispersion medium.
